# EUROPEAN PATENT APPLICATION

(11) **EP 4 449 885 A1**
(43) Date of publication of application: **23.10.2024**
(21) Application number: 24171214.0
(22) Date of filing: 19.04.2024
(51) Int. Cl.: A23L 15/00, A23B 5/18, A23B 5/20

(54) **METHOD FOR PRODUCING PEELED EGGS ON AN INDUSTRIAL SCALE**

(30) Priority: 21.04.2023 BE 202305309
(71) Applicant: Eierhoeve Lecoque nv, 3700 Tongeren (BE)
(72) Inventor: LECOQUE, Jean-Marie, 3700 Tongeren (BE); LECOQUE, Catherine, 3700 Tongeren (BE); LECOQUE, Céline, 3700 Tongeren (BE)
(74) Representative: Brantsandpatents bv

(57) **Abstract**

The invention relates to the production of peeled, boiled eggs, such as chicken eggs. The method described herein contributes to the shelf life and quality of the boiled eggs as well as to reducing water consumption during the production process.

## Description

### TECHNICAL FIELD

The invention relates to the production of peeled eggs, such as chicken eggs. The method described herein contributes to the shelf life and quality of the boiled eggs as well as to reducing water consumption during the production process.

### PRIOR ART

Boiled eggs are consumed in large quantities. They are often offered processed in supermarkets or in the catering industry, for example as part of salads or sandwiches. Boiled eggs are often supplied peeled by the producer. Just like in the entire food industry, an enormous amount of water is used in the production process of peeled eggs. After all, the eggs must be boiled, cooled, peeled and washed in water. The large quantities of process water obtained as a result are usually discharged as wastewater or discharged after dilution with tap water.

An additional and recognized problem in the production of peeled eggs is the use of chemical disinfectants. For shelf life and food safety reasons, the eggs must be disinfected after peeling. In the conventional production process this is often done with chlorinated water, sodium hypochlorite, hydrogen peroxide, etc.

Based on consumer concerns and legislative requirements, there is a need for solutions for a more ecological, sustainable, and responsible way of production that uses fewer resources without compromising food safety.

In response to this, for example JP2005295889 and GB2342273 describe methods in which ozone water or ozonized brine is added to peeled eggs, which, however, still does not provide an optimal solution. The present invention aims to find a solution for at least some of the above problems. The inventors of this patent application developed an improved method for the production of boiled eggs by using ozone water before peeling the eggs, and by combining the cooling, peeling and disinfection processes. In addition, a method has been developed to purify and recover the process water, which significantly reduces the required amount of process water.

### SUMMARY OF THE INVENTION

The invention concerns a method for the production of peeled eggs on an industrial scale, comprising the steps:
a) boiling (1) fresh eggs;
b) cooling (2) the boiled eggs by immersion in ozone water, wherein the ozone water has a temperature between 1 and 10°C and an ozone concentration between 0.2 and 1 ppm;
c) mechanically peeling (3) the boiled eggs from step b); and
d) treating (4) the peeled eggs from step c) with a solution of food acids, wherein the solution has a pH between 2 and 5.

According to a further embodiment of the method, the method comprises an additional purification step (6) of the process water from step a) and/or step b). According to a still further embodiment of the method, the method comprises an additional step wherein at least 50% of the purified process water is reused in the boiling step a) and/or in the cooling step b).

According to another or further embodiment of the method, a reverse osmosis step (7) is carried out when purifying the process water. According to another or further embodiment of the method, the purified process water is additionally treated with ozone gas (8) after the reverse osmosis step.

According to another or further embodiment of the method, steps b) and c) are carried out in a setup with recirculating ozone water, wherein the recirculating ozone water has a temperature between 1 and 10°C and an ozone concentration between 0.2 and 1 ppm. In a further embodiment, this setup comprises:
- a reservoir (10) configured for cooling boiled eggs in recirculating ozone water;
- a device for mechanically peeling (11) the cooled eggs from the previous step;
- a particle filter (12) configured to remove solids or particles from the recirculating ozone water;
- a circulation pump (13) configured to direct the ozone water in a certain flow direction through the setup;
- an ozone injection system (14) located downstream of the particle filter in relation to the flow direction and configured to inject ozone into the recirculating ozone water; and
- a water cooling system (17) located downstream of the ozone injection system in relation to the flow direction and configured to maintain the temperature of the recirculating ozone water between 1°C and 10°C.

In a further embodiment of the method, the ozone injection system is configured to inject ozone gas under pressure until a supersaturated ozone water solution is obtained. In a yet further embodiment of the method, the setup also comprises a buffer tank (15) that is placed between the ozone injection system and the water cooling system in relation to the flow direction of the recirculating ozone water, wherein the buffer tank is configured to allow ozone gas that is not absorbed in the ozone water to escape under atmospheric pressure. In a still further embodiment of the method, the setup is configured to burn up the escaped ozone gas.

### DESCRIPTION OF THE FIGURES

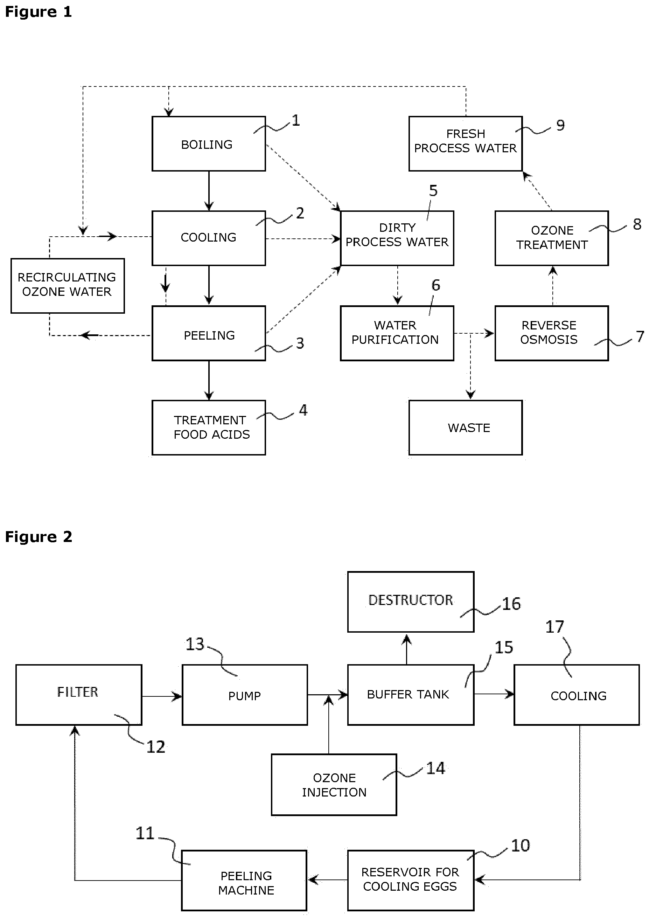

Figure 1 describes the different steps of the method. Fresh eggs are boiled (1) after which they are cooled (2) and peeled (3) with ozone water. Peeled eggs are post-treated with a food acid solution (4) and packaged in a low-oxygen (e.g. COz or nitrogen gas) packaging or packed in buckets wherein the eggs are immersed in a food acid solution. The dirty process water (5) is first purified into rainwater quality water according to a conventional biological treatment process (6). The purified water then undergoes a reverse osmosis step (7). The water obtained is optionally mixed with drinking water and after a treatment step with ozone gas (8), the fresh process water (9) is used as process water for all water-consuming steps such as boiling, cooling and peeling eggs. The waste fraction obtained from purifying the process water is discharged.
Figure 2 describes the recirculating ozone water loop. Process water is injected with ozone under pressure (14), after which the excess and unabsorbed portion of ozone gas can escape under atmospheric pressure into a buffer tank (15). The escaped ozone gas can be burned (16), for example at 400°C. The ozone water is then cooled (17) to approximately 2°C and used to cool (10) and peel (11) the boiled eggs. The contaminated peeling water is filtered (12) to remove solids such as eggshell pieces and is reinjected with ozone gas (14). During the peeling phase, an amount of fresh water is added to compensate for the loss of process water during the process. A circulation pump (13) ensures continuous circulation of the process water through the setup.

### DETAILED DESCRIPTION

The invention concerns an innovative method for the production of boiled and peeled eggs, more specifically poultry eggs, more specifically chicken eggs. The invention aims to provide technical solutions for a number of technical problems during the production and processing of boiled poultry eggs. This document describes methods for producing boiled eggs wherein the required amount of process water is significantly reduced and the use of chemical disinfectants is avoided. Moreover, the peeled eggs obtained by means of the methods of the invention have an extended shelf life compared to eggs obtained by conventional methods.

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, this must be understood to mean that the value of the magnitude where the term "approximately" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

"Poultry" is a term used to refer to a group of birds that are bred and raised for their meat, eggs, feathers and/or other products. Non-limiting examples include chickens, turkeys, ducks, geese, quails and pigeons.

"Egg" or "eggs" as referred to herein refers to the food product produced by birds and poultry, such as chickens, ducks, geese, quails, etc. Eggs have a hard outer shell and contain a nutritious yolk and egg white. "Boiling eggs" as described herein means producing a hard-boiled egg where the yolk and egg white are in a solid form and are no longer liquid. "Peeling eggs" or "peeling boiled eggs" or "eggs are peeled" means removing the hard outer shell of a boiled egg. A "peeled egg" refers to an egg from which the shell has been partially or completely removed. In a specific embodiment of the invention, eggs refer to poultry eggs.

"Poultry eggs" are eggs from poultry. In a specific embodiment of the invention, poultry eggs are eggs from chickens, quails, pigeons or geese. In a most specific embodiment of the invention, poultry eggs are chicken eggs.

"Ozon" or "ozone gas" is a naturally occurring gas consisting of three oxygen atoms (O₃) and can be produced by electrical discharge or ultraviolet radiation of oxygen (O₂) in the air. Ozone has an antimicrobial effect. When ozone is applied to food products, it can kill or inactivate the microorganisms present, such as bacteria, viruses and fungi. The use of ozone has several advantages over traditional disinfection methods, such as the use of chlorine or hydrogen peroxide. Ozone leaves no residue on food, unlike some chemical disinfectants. In addition, ozone is an environmentally friendly option because it breaks down into oxygen after use. Moreover, when the ozone use is dosed as described here, there is no change in the taste of the treated product.

"Ozone water" or "ozone water solution" or "ozonated water" is water that has been treated with ozone gas. Ozone water is created by bubbling ozone gas through water, causing the ozone to dissolve or be absorbed in the water. Ozone can be added to water in several ways, depending on the application and dosage required. A non-limiting method of ozone water production is diffusion, where ozone is injected into water through an ozone diffuser, which produces small ozone bubbles that dissolve in the water. Another non-limiting method involves introducing ozone into the water by blowing bubbles into a column of water. In yet another non-limiting example, a vacuum is created that allows ozone from an ozone generator to be drawn into the water. This vacuum method is efficient and suitable for higher flow rates.

"Reservoir" refers to a receptacle for liquids. Non-limiting examples are a container, a barrel, a tank. A reservoir or receptacle may be a closed reservoir or receptacle where there is no or very limited contact with the environment outside the reservoir but can also be an open reservoir or recipient where there is unlimited and continuous contact with the environment. A reservoir can be used to safely store, transport liquids or to perform certain processes or manipulations, such as a boiling process, cooling process, peeling process, etc. Recipients for liquids can be made of different materials, such as glass, plastic, metal or ceramic, and come in different sizes and shapes, depending on the specific needs of the user. They are used in many different sectors, including the food industry, pharmaceutical industry, chemical industry and household sector. In the context of the current patent application, the receptacles used are resistant to ozone water and are therefore ozone resistant.

A setup with "recirculating water" or "recirculating ozone water" or a "recirculating water loop" or a "recirculating water system" is a system wherein water is recirculated and reused in a closed circuit instead of the process water being drained and refreshed every time.

In a recirculating water system, the water is passed through one or more filters to remove impurities and waste products. The purified water is then partially or completely returned to the system to be used again. This reduces water consumption to a minimum and waste is removed efficiently.

In a first aspect, the invention concerns a setup for cooling and peeling boiled eggs wherein the cooling and peeling of the eggs is carried out with ozone water, more specifically with recirculating ozone water.

Ozone is increasingly used in the food industry as an effective and safe way to disinfect and preserve various food products. Ozone is a powerful oxidant that occurs naturally in the atmosphere. Ozone also works very quickly and efficiently, making it possible to treat large volume flows in a short time. It can be used to kill or inactivate microorganisms, such as bacteria, viruses and fungi, but ozone also slows down oxidative processes, which can extend the shelf life of food products treated with ozone. The food industry usually uses ozone dissolved in water, also called ozone water or ozonized water.

One of the advantages of ozone is that it is a natural disinfectant that leaves no harmful or disruptive residues, unlike chemical disinfectants, such as chlorine or ammonia. However, in high concentrations (≥ 5 ppm) ozone can negatively affect the taste of food products such as eggs. It is therefore appropriate to keep ozone concentrations as low as possible without sacrificing the antimicrobial effect.

Ozone applications are one of the most environmentally friendly methods of disinfection and combating oxidation because it naturally breaks down into oxygen after use and no harmful by-products are formed. However, ozone is a highly reactive and potentially dangerous gas that is harmful to human health at high concentrations. Therefore, the ozone concentration in work areas must be kept as low as possible. Therefore, the use of oversaturated ozone water should be avoided in order to prevent the escape of ozone from the ozone water and thus increasing the ozone concentration in work areas. The methods described herein achieve this by, after injecting ozone into the pressurized process water, transferring the ozone water to a buffer tank under atmospheric pressure where the excess ozone can escape and be discharged. The ozone concentration of the ozone water used in the work area is therefore less than 1 ppm, more specifically less than 0.5 ppm, more specifically in a concentration between 0.2 and 0.4 ppm.

In summary, the use of ozone in the food industry ensures a better quality of the end product and contributes to more sustainable food production but must be limited in concentration so as not to negatively affect the health of people who work with ozone water and to avoid affecting the taste of the treated product.

Traditionally, during the industrial production of boiled eggs, the eggs are only disinfected after boiling, cooling and peeling. The inventors of this patent application surprisingly found that cooling boiled eggs in ozone water before peeling the boiled eggs significantly reduces the microbial load compared to treating the boiled eggs with ozone water after peeling. This increases the quality and shelf life of the end product.

In addition, the inventors developed a setup for cooling and peeling the boiled eggs where the process water is continuously reused. Incorporating such a recirculating water system significantly reduces the use of process water. The setup includes a filter system to remove the shell remnants of the boiled eggs from the process water and an ozone injection system for disinfecting the process water.

In a further embodiment of the setup for cooling and peeling boiled eggs, the setup comprises the following elements:
a) a reservoir configured for cooling boiled eggs in recirculating ozone water;
b) a system or device configured to peel the cooled eggs from the previous step;
c) a particle filter configured to remove solids or particles in the recirculating ozone water, wherein the particle filter is placed downstream of the device from the previous step in relation to the flow direction;
d) a circulation pump configured to pump the ozone water in a certain flow direction through the setup;
e) an ozone injection system located downstream of the particle filter in relation to the flow direction and configured to inject ozone or ozone gas into the recirculating water;
f) a water cooling system located downstream of the ozone injection system in relation to the flow direction and configured to maintain the temperature of the recirculating water between 1°C and 10°C.

In a specific embodiment of the setup, the system or device of step b) is a device for mechanically peeling poultry eggs or an egg peeling machine. In a further or more specific embodiment of the setup, the circulation pump is placed downstream of the particle filter in relation to the flow direction, more specifically between the particle filter and the ozone injection system.

In a specific embodiment of the setup, the reservoir of step a), the device of step b), the particle filter of step c) and the circulation pump of step d) contain at least one water supply opening and at least one water discharge opening. In a specific embodiment of the setup, the recirculating water flow is a continuous water flow and the various parts a)-f) are connected to each other via water pipes for the recirculating ozone water.

One of the components of the setup described herein is a device configured for mechanical peeling or shelling of the boiled eggs or peeling machine for boiled eggs. Boiled eggs can be de-shelled in several ways. The way in which this is done does not determine the setup or the method described herein. A non-limiting example is removing the eggshell using chemical solutions to weaken the shell. Other non-limiting examples use pressure differences to break and remove the shells, such as vacuum technology or such as high pressure air technology. Another non-limiting example is the mechanical removal of the eggshell. In this last method, the boiled eggs can be vibrated or shaken to break the shell and/or the eggs can be rolled in a machine to break the shell. After breaking and partially removing the eggshell, the eggs are washed to completely remove shell remnants. Washing usually consists of continuously spraying the eggs with washing water during the peeling process. In a specific embodiment, the eggs are sprayed with ozone water during peeling. In another specific embodiment of the setup, the device for mechanically peeling boiled eggs is a device for mechanically removing the eggshell from the boiled eggs.

A "particle filter" as mentioned herein is a device that removes undissolved particles from a stream of liquid, wherein the filter consists of a medium designed to retain particles of different sizes as the liquid flows through the filter. Depending on the size of the filter openings, larger or smaller particles are retained. The particle filter in the setup of the invention is preferably a coarse filter. Coarse filters have larger pores than fine filters and are used to remove large particles from a liquid. The pores of the particle filter of the setup are preferably smaller than 0.5 mm.

In a specific embodiment of the setup, the pores of the particle filter have a size smaller than 500 µm, smaller than 400 µm, smaller than 300 µm, smaller than 200 µm, smaller than 100 µm or smaller than 50 µm. The choice of the type of filter is not decisive for the execution of the invention as long as impurities such as the shell remnants of the peeled eggs are efficiently removed from the recirculating water flow.

A non-limiting example of particle filters are arc filters or arc sieves. These filters have sieve panels or plates arranged in the shape of an arc. The solid particles that are too large to pass through the openings in the sieve panels remain on the surface of the sieve and are then discharged. In a specific embodiment of the setup, the particle filter is an arc filter with a pore size of approximately 200 µm.

Another non-limiting example of a particle filter is an in-line filter. This filter is designed to be installed in the pipe and works by passing the liquid through a filter element that traps the impurities while the pure liquid flows through. The particles that are retained by the in-line filter are removed by flushing the filter with a pressure difference in countercurrent. In a more specific embodiment of the setup, the in-line filter has a pore size of approximately 50 µm.

A "circulation pump" as referred to herein refers to a pump for moving, directing, pumping or circulating a liquid (more specifically water, even more specifically ozone water) through the setup of the invention. The choice of the type of circulation pump does not determine the implementation of the invention. A non-limiting example of a circulation pump is a centrifugal pump. A centrifugal pump forces a fluid through a setup using centrifugal force generated by a rotating impeller. The pump consists of an inlet, an outlet and an impeller driven by a motor. The liquid flows into the inlet and is collected by the impeller, which exerts a centrifugal force on the liquid due to the rotating movement. This force propels the fluid out and through the outlet of the pump. The flow rate or amount of liquid that flows through a setup per unit of time is preferably between 10 and 100 m³ per hour, between 20 and 80 m³ per hour, between 30 and 75 m³/h or approximately 60 m³/h.

An "ozone injection system" as mentioned here is a system to generate ozone gas and then inject it into water to produce ozone water or ozonized water. Ozone, or the triatomic form of oxygen, is created by exposing oxygen molecules (O₂) to an electrical discharge, also called a point discharge. This process is called ozonation and takes place in an ozone generator. An ozone generator consists of an electrical generator that produces high voltage and two electrodes, where one electrode is positively charged and the other electrode is negatively charged. When an electric current passes between the electrodes, a point discharge occurs and oxygen molecules are split into individual oxygen atoms (O) which then react with other oxygen molecules (Oz) to form ozone (O3).

In a specific embodiment of the setup, the recirculating water loop is a closed loop, where 100% of the process water is recirculated.

In another specific embodiment of the setup, the setup comprises a water supply for fresh process water that is added to the recirculated purified process water. In a more specific embodiment of the setup, at least 25%, at least 30%, at least 40%, at least 50%, at least 60%, at least 70%, at least 80%, at least 90% or at least at least 95% of the process water is recirculated. The remainder of the necessary process water is obtained by supplying fresh water, more specifically water of drinking water quality.

According to a more specific embodiment of the method, the water cooling system from step f) keeps the recirculating ozone water at a temperature between 1° and 10°C. According to an alternative or more specific embodiment, the water cooling system from step f) cools the recirculating ozone water to a temperature between 1°C and 8°C, between 2° and 7°C, between 3° and 6°C or to a temperature of about 4°C, about 3°C or about 2°C.

According to another or further embodiment of the method, the setup of the invention contains a buffer tank that is placed between the ozone injection system and the water cooling system in relation to the flow direction of the recirculating ozone water, wherein the buffer tank is configured to allow ozone gas that is not absorbed in the ozone water to escape under atmospheric pressure. Allowing the ozone gas to escape into a closed buffer tank prevents even low concentrations of ozone gas from being released in work areas.

According to a further embodiment of the method, the setup includes an ozone destructor configured to remove the ozone gas that has escaped from the ozone water into the buffer tank. There are several methods available to treat the vent gas. Two popular methods are thermal and catalytic destruction. In thermal destruction or combustion, the half-life of ozone is reduced to milliseconds, while in catalytic destruction ozone is converted to oxygen on the surface of the catalyst.

In a specific embodiment, the ozone destructor removes the ozone gas by combustion. In a more specific embodiment, the ozone destructor removes the ozone gas by combustion at approximately 400°C.

As previously described, ozone gas is a reactive gas that can also attack materials. The material of the setup that comes into contact with the ozone gas must therefore be ozone resistant. Non-limiting examples of ozone resistant material as described herein are stainless steel (SS), PVC, concrete, plexiglass, Teflon, glass.

In a second aspect, the invention concerns a method for obtaining or producing peeled eggs, wherein one or more boiled eggs are cooled in ozone water with a temperature between 1°C and 10°C and then peeled.

In an embodiment of the method for producing peeled eggs, the method comprises the following steps:
a) boiling one or more eggs;
b) cooling the one or more boiled eggs in ozone water with a temperature between 1 and 10°C;
c) peeling the one or more boiled eggs from step b); and
d) treating the peeled eggs from step c) with a solution of food acids, wherein the solution has a pH between 2 and 5.

In a specific embodiment of the method, the ozone water has an ozone concentration lower than 5 ppm, lower than 4 ppm, lower than 3 ppm, lower than 2 ppm or lower than 1 ppm. In another or further embodiment of the method, the ozone water has an ozone concentration between 0.1 and 1 ppm, between 0.15 and 0.8 ppm, between 0.2 and 0.6 ppm, between 0.2 and 0.5 ppm or between 0.2 and 0.4 ppm.

"Food acids" as mentioned here refers to organic compounds that occur naturally in foods and beverages or are added to foods to improve taste, texture, shelf life and safety. Food acids generally have a sour taste and lower the pH value of food and drinks. Non-limiting examples are citric acid, malic acid, lactic acid, phosphoric acid, tartaric acid, acetic acid, ascorbic acid (vitamin C), succinic acid. The method described herein uses a food acid solution with a pH between 2 and 5. A pH higher than 5 reduces the antimicrobial effect of the acid solution, while a solution with a pH lower than 2 negatively affects the taste of the peeled eggs. In a specific embodiment of the method, the solution of food acids has a pH between 2.5 and 4 or about 2.5, about 3, about 3.5 or about 4.

Treating the peeled eggs with the food acid solution can be carried out in different ways. After peeling, the eggs can be immersed in a reservoir filled with the food acid solution and then packaged in an oxygen-poor environment. Another option is that after peeling the eggs are immediately packed in a receptacle, after which the receptacle is filled with the food acid solution and the peeled eggs are stored submerged.

The food acid solution has a further antimicrobial effect, which on the one hand benefits the shelf life of the peeled eggs, but on the other hand also positively influences the shelf life of food products that are finished using the peeled eggs or in which peeled eggs are incorporated. Non-limiting examples of such products are salads or sandwiches to which slices of peeled egg are added, egg salads based on peeled eggs, etc. Treating the peeled eggs with the food acid solution has an additional beneficial effect because this treatment causes up to 10% moisture loss in the eggs. This prevents moisture loss from peeled eggs when further processed in salads or sandwiches. This is particularly advantageous for the processing industry because when processing traditionally peeled eggs, an amount of moisture is released from the egg, which can have an adverse effect on the food product in which the eggs are processed, e.g. sandwiches.

In a specific embodiment of the method, the cooling and peeling of the boiled eggs is carried out in one of the setups previously described in the first aspect of the invention.

In a further embodiment of the method, the method comprises an additional step:
e) purifying the process water from step a), b) and/or step c).

In a specific embodiment of the method, the purification of the process water from step b) and/or c) is carried out using a filter system such as in the setup from the first aspect of the invention. In a further embodiment, the purification of the process water from step b) and/or c) is additionally carried out using ozone as in the setup described in the first aspect of the invention. In a specific embodiment, the purification of the process water from step b) and/or c) is carried out in one of the setups previously described in the first aspect of the invention.

In a specific embodiment of the method, purifying the process water from step a) or from steps a), b) and c) comprises the following steps:
- filtering the process water;
- the biological purification of the filtered process water; and
- performing reverse osmosis.

Filtering of the process water can be performed with similar arc filters or in-line filters as described previously herein.

"Biological purification" refers to biological wastewater treatment. During biological wastewater treatment, purifying microorganisms break down the organic pollution in the filtered wastewater. In the process, they consume oxygen that is introduced into the water with aerators. During the purification process, the microorganisms grow as sludge flocs (biosludge or activated sludge). After purification, these sludge flocs can be separated from the purified wastewater by settling or via membrane filtration.

"Reverse osmosis" is a process where a semipermeable membrane is used to remove dissolved salts and minerals from water. This is done by forcing water through the membrane under high pressure, causing only the water molecules to pass through the membrane while the dissolved salts and minerals are retained. The result is that the water on one side of the membrane is much purer than on the other side. Reverse osmosis is often used in water treatment plants to produce drinking water from brackish or salt water, and also in industry to purify water for specific applications. In a specific embodiment of the method, the semipermeable membrane has a pore size between 0.1 nm and 1 nm.

In a further embodiment, the purification of the process water from step a) or from steps a), b) and c) is additionally carried out using ozone. In a specific embodiment, the ozone treatment is carried out as described in the first aspect of the invention.

In a further embodiment of the method, the method comprises an additional step:
f) reusing at least part of the purified process water from step e) in the boiling step a) and/or in the cooling and peeling step b)-c).

In a specific embodiment of the method, at least 10%, at least 20%, at least 30%, at least 40%, at least 50%, at least 60%, at least 70%, at least 80%, at least 90%, at least 95% or approximately 100% of the purified process water from step c) is reused in step a), step b) and/or step c).

In what follows, the invention is described by way of non-limiting examples illustrating the invention, and which are not intended to and should not be interpreted as limiting the scope of the invention.

### EXAMPLES

### EXAMPLE 1: A new method for peeling boiled eggs on an industrial scale.

The various embodiments of the method of the invention described herein consist in producing peeled eggs without the use of chemical disinfectants and with a drastically reduced consumption of process water (Figure 1). Fresh eggs are boiled in a first step (boiling water temperature >94°C with passage time <13 minutes). Since the eggs are considered sterile after the boiling process, the further disinfection step of the eggs is traditionally carried out after peeling the boiled eggs. The inventors surprisingly found that cooling the boiled eggs in ozone water before starting peeling resulted in a much lower microbial load compared to disinfecting peeled eggs in ozone water. Table 1 shows the difference in microbial load in the cooling water of boiled eggs with and without ozone treatment of the cooling water. The ozone water used has a concentration between 0.2 and 0.4 ppm. This concentration of ozone is high enough for an effective antimicrobial effect but low enough that ozone does not affect the taste of the eggs.

**Table 1. Comparison of the bacterial count (CFU) with and without ozone in the cooling water from 5 representative samples. Entero stands for Enterobacteria, a large family of Gram-negative bacteria that includes well-known pathogens such as E. coli and Salmonella.**

| Ozone in cooling water | CFU/ml 22°C | CFU/ml 30°C | CFU/ml entero |
|---|---|---|---|
| present | <10 | 10 | <10 |
| present | <10 | <10 | <10 |
| present | <10 | 10 | <10 |
| present | 20 | <10 | <10 |
| present | 10 | <10 | <10 |
| absent | 2480 | 2440 | 50 |
| absent | 1360 | 1200 | 300 |
| absent | 2850 | 1650 | 100 |
| absent | 2870 | 2650 | <10 |
| absent | 3480 | 1160 | 170 |

After cooling the boiled eggs in ozone water, the eggs are mechanically peeled by a conventional egg peeling machine. The eggs are rolled on rollers, which breaks the eggshell and partially or completely removes the shell from the eggs. Peeling eggs is done while continuously watering the eggs with ozone water using a spray system. After peeling, the eggs undergo further treatment with an acidic solution with a pH of approximately 3. This post-treatment can consist of immersing the eggs in a solution of food acids such as acetic acid and citric acid, after which the eggs are packed in a low-oxygen packaging, for example by replacing oxygen with nitrogen or carbon dioxide. For the post-treatment, it is also possible to choose to pack the washed and peeled eggs directly (for example in buckets or bags) with the packaging being filled with the same food acid solution.

The food acid solution has a further antimicrobial effect, which benefits the shelf life of the peeled eggs, but also of food products that are processed or finished using the peeled eggs, for example salads or sandwiches. The food acid solution also causes up to 10% moisture loss in the eggs. This prevents moisture loss from peeled eggs when further processed in salads or sandwiches.

### EXAMPLE 2: A recirculating water system for cooling, peeling and disinfecting boiled eggs.

A setup was developed to optimize energy and water use during the production of peeled eggs where the eggs are disinfected and peeled using recirculating ozone water. Ozone is injected into the process water under pressure. The excess ozone that is not absorbed by the process water can escape into a buffer tank under atmospheric pressure. The escaped ozone gas is burned off at 400°C.

The saturated ozone water is then cooled to a temperature of 2°C and ends up in a reservoir where the boiled eggs are cooled by immersion. After cooling, the eggs are machine peeled under continuous spraying with ozone water. The peeling water is then filtered using an arc filter or in-line filter to remove the shell remnants and other undissolved impurities from the recirculating ozone water. The recirculation of the ozone water is maintained by a circulation pump placed between the filter system and the ozone injection system (Figure 2).

### EXAMPLE 3: Water purification method of the process water.

The method of producing peeled eggs on an industrial scale described in this document requires between 150 and 200 m³ of water for a volume of approximately 1,000,000 eggs. In order to have to dispose of as little wastewater as possible and to reuse as much process water as possible, a water purification method was developed that is compatible with the production of boiled and peeled eggs on an industrial scale (Figure 1). The process water from boiling, cooling, and peeling the eggs is first collected and filtered to remove undissolved impurities from the water. In a next step, collected rainwater is added to the filtered process water, after which the water undergoes biological purification.

In a next step, the purified wastewater undergoes reverse osmosis. For this purpose, a semipermeable membrane with a pore size between 1 and 0.1 nm is used. The waste products from the biological purification and the reverse osmosis step are removed, while the purified water after ozone treatment can be used again as process water for boiling, washing and peeling boiled eggs.

Using the method described in example 3, up to 70% of the process water can be recycled and the necessary 150-200 m³ of fresh water per day can be reduced to 45-60 m³ of fresh water per day.

The present invention should not be construed as being limited to the embodiments described above and certain modifications or changes may be added to the examples described without having to re-evaluate the appended claims. For example, the present invention has been described with reference to chicken eggs, but it should be understood that the invention can be applied to other poultry eggs, e.g. quail or goose eggs.

## Claims

1. Method for the production of peeled eggs on an industrial scale, comprising the steps:
a) boiling (1) fresh eggs;
b) cooling (2) the boiled eggs by immersion in ozone water, wherein the ozone water has a temperature between 1 and 10°C and an ozone concentration between 0.2 and 1 ppm;
c) mechanically peeling (3) the boiled eggs from step b); and
d) treating (4) the peeled eggs from step c) with a solution of food acids, wherein the solution has a pH between 2 and 5.

2. The method according to claim 1, comprising an additional step:
e) purifying the process water (5) from step a), step b) and/or step c).

3. The method according to claim 2, comprising an additional step:
f) reusing at least 50% of the purified process water (9) from step e) in boiling step a), cooling step b) and/or peeling step c).

4. The method according to claims 2-3, wherein purifying the process water includes a biological water purification step (6).

5. The method according to claims 2-4, wherein purifying the process water includes a reverse osmosis step (7).

6. The method according to claim 5, where the purified process water is injected with ozone gas after the reverse osmosis step (8).

7. The method according to claims 1-6, where steps b) and c) are carried out in a setup with recirculating ozone water, wherein the recirculating ozone water has a temperature between 1 and 10°C and an ozone concentration between 0.2 and 1 ppm, the setup comprising:
i. a reservoir (10) configured for cooling boiled eggs in recirculating ozone water;
ii. a device (11) for mechanically peeling the cooled eggs from the previous step;
iii. a particle filter (12) configured to remove solids or particles from the recirculating ozone water;
iv. a circulation pump (13) configured to direct the ozone water in a certain flow direction through the setup;
v. an ozone injection system (14) located downstream of the particle filter (12) in relation to the flow direction and configured to inject ozone into the recirculating ozone water;
vi. a water cooling system (17) located downstream of the ozone injection system (14) in relation to the flow direction and configured to maintain the temperature of the recirculating ozone water between 1°C and 10°C.

8. The method according to claim 7 wherein the ozone injection system (14) is configured to inject ozone gas under pressure until a supersaturated ozone water solution is obtained.

9. The method according to claims 7-8, wherein the setup also comprises a buffer tank (15) that is placed between the ozone injection system (14) and the water cooling system (17) in relation to the flow direction of the recirculating ozone water, wherein the buffer tank is configured to allow ozone gas that is not absorbed in the ozone water to escape under atmospheric pressure.

10. The method according to claim 9, wherein the setup also includes an ozone destructor (16) configured to burn up the escaped ozone gas.

11. The method according to claims 1-10, wherein the eggs are poultry eggs.

12. The method according to claim 11, wherein poultry eggs are from chickens, quails, pigeons or geese.

13. A setup for cooling and peeling boiled eggs with recirculating ozone water comprising:
a) a reservoir (10) configured for cooling boiled eggs in recirculating ozone water;
b) a device (11) for mechanically peeling the cooled eggs from the previous step;
c) a particle filter (12) configured to remove solids or particles from the recirculating ozone water;
d) a circulation pump (13) configured to direct the ozone water in a certain flow direction through the setup;
e) an ozone injection system (14) located downstream of the particle filter (12) in relation to the flow direction and configured to inject ozone into the recirculating ozone water;
f) a water cooling system (17) located downstream of the ozone injection system (14) in relation to the flow direction and configured to maintain the temperature of the recirculating ozone water between 1°C and 10°C.

14. The setup according to claim 13, wherein the ozone injection system (14) of step e) is configured to inject ozone gas under pressure into a supersaturated ozone water solution.

15. The setup according to claims 13-14, further comprising a buffer tank (15) that is placed between the ozone injection system (14) and the water cooling system (17) in relation to the flow direction of the recirculating ozone water, wherein the buffer tank is configured to allow ozone gas that is not absorbed in the ozone water to escape under atmospheric pressure.

16. The setup according to claim 15, further comprising an ozone destructor (16) configured to burn up the escaped ozone gas.

17. The setup according to claims 13-16, wherein the eggs are poultry eggs.

18. The setup according to claim 17, wherein poultry eggs are from chickens, quails, pigeons or geese.
